# EUROPEAN PATENT SPECIFICATION

(11) **EP 4 187 166 B1**
(45) Date of publication and mention of the grant of the patent: **17.12.2025**
(21) Application number: 20945966.8
(22) Date of filing: 29.12.2020
(51) Int. Cl.: F24F 11/32, F24F 11/64, F24F 11/77, F24F 11/80, F24F 11/88, F24F 110/10, F24F 13/28, F24F 8/10

(54) **PURIFIER CONTROL METHOD, PURIFIER CONTROL APPARATUS, AND PURIFIER**
REINIGUNGSERSTEUERUNGSVERFAHREN, REINIGUNGSERSTEUERUNGSVORRICHTUNG UND REINIGUNGSER
PROCÉDÉ ET APPAREIL DE COMMANDE DE PURIFICATEUR ET PURIFICATEUR ASSOCIÉ

(30) Priority: 22.07.2020 CN 202010712870
(43) Date of publication of application: 31.05.2023
(73) Proprietor: Gree Electric Appliances, Inc. of Zhuhai, Zhuhai, Guangdong 519070 (CN)
(72) Inventor: LING, Wei, Zhuhai, Guangdong 519070 (CN); YIN, Sisi, Zhuhai, Guangdong 519070 (CN); WANG, Hongyan, Zhuhai, Guangdong 519070 (CN); CAI, Xiaolong, Zhuhai, Guangdong 519070 (CN)
(74) Representative: Zacco GmbH
(86) International application number: PCT/CN2020/141098
(87) International publication number: WO 2022/016816

(56) References cited:
- CN-A- 1 776 336
- CN-A- 107 013 967
- CN-A- 108 167 958
- CN-A- 108 613 313
- CN-A- 109 668 237
- CN-A- 111 947 272
- CN-U- 206 001 618
- CN-U- 206 709 251
- CN-U- 207 035 342
- CN-U- 209 355 390
- JP-A- 2001 124 386
- JP-A- 2017 148 304

## Description

### Cross-Reference to Related Application

The present disclosure claims the priority to Patent Application No. 202010712870.7, filed on July 22, 2020 and entitled "Control Method and Control Apparatus for Purifier and Purifier".

### Technical Field

The present invention relates to temperature control technology of a purifier, in particular to a control method and a control apparatus for a purifier and the purifier.

In the following passages, the term "disclosure" refers to the invention as described in the description; the scope of protection is defined by the appended claims".

### Background

To satisfy different demands of consumers, an air purifier with a heating function has appeared on the market, and it is capable of heating air passing through a filter screen. Such an air purifier will stop heating upon reaching a preset temperature, otherwise it will continue heating. In some special cases, the temperature of air heated by a heater is too high, when the high-temperature air passes through the filter screen, the filter screen is overheated and damaged. In addition, due to a wide distribution range of the filter screen, an existing control means has poor temperature control accuracy, when heated by the heater, air flowing through part of the filter screen may be excessively hot, resulting in local damage to the filter screen and causing a potential safety hazard, or air flowing through various areas of the filter screen is inconsistent in temperature, resulting in poor user experience.

In addition, a patent document with publication number CN108167958 relates to the technical field of air purification devices, and discloses a multifunctional air purifier, comprising a front housing, a housing and a rear housing, wherein a plurality of air inlet holes are arranged at intervals on the front housing, and a first filter layer, a second filter layer, a third filter layer and a heating layer are provided in the housing, In addition, a wire groove, a carbon dioxide sensor, a formaldehyde sensor, a PM2.5 sensor and a temperature sensor are further provided on the housing, a fan and a power supply are mounted on the rear housing; the power supply is electrically connected to a control processor; the control processor is electrically connected to the carbon dioxide sensor, the formaldehyde sensor, the PM2.5 sensor and the temperature sensor respectively via the wire slots, the control processor is further electrically connected to a fan and the described heating wire; in addition, a plurality of air outlet holes are further provided at intervals on the rear housing. The air purifier provided by this document integrates an air purifier with a fan heater, and can achieve automatic control.

In addition, a patent document with publication number CN107013967 discloses: the present invention provides a high-precision multi-zone temperature control system. At least one carbon fiber heating device is disposed in each space, and the space is adjusted to be divided into a plurality of zones. A carbon fiber heating mesh in each zone is connected to a corresponding temperature control regulator. At least one temperature sensing probe is disposed in each zone, and the temperature sensing probe is connected to a corresponding temperature control regulator in the zone.

The present invention also provides a high-precision multi-zone temperature control method. A temperature-sensing probe collects temperature information in a zone and feeds back the temperature information to a corresponding temperature-control regulator. After a carbon fiber heating apparatus receives an instruction of the temperature-control regulator, the air purified from an air-conditioning box above is heated to obtain a unidirectional airflow with a required temperature, and the airflow is sent to the corresponding zone. The present invention achieves the temperature adjustability of each region in the space, and can achieve the temperature control and maintenance of partitioned regions in the case of different loads in the space, so that the temperature regulation is more accurate, reliable and energy-saving, and the heating efficiency and stability are improved.

### Summary

A technical solution used by the present disclosure for solving the technical problem thereof is as below:
In a first aspect,
a control method for a purifier includes:
   acquiring a temperature inside the purifier; and
   controlling a temperature control component according to the temperature to make the temperature fall within a preset normal temperature range, and the temperature control component includes a plurality of zonal temperature control systems, each of the plurality of zonal temperature control system heats air passing through one filter screen zone of the purifier, and the zonal temperature control systems correspond to filter screen zones one by one.

Optionally, acquiring a temperature inside a purifier includes:
acquiring a temperature of air passing through each filter screen zone in the purifier.

Optionally, a minimum and a maximum of the preset normal temperature range are 56°C and 95°C respectively.

Optionally, the temperature control component includes a fan, and the controlling a temperature control component according to the temperature includes:
adjusting a rotating speed of the fan according to the temperature.

Optionally, the zonal temperature control system includes: a heating device and a temperature controlled switch,
the temperature controlled switch is configured to be connected or disconnected under control by the controller; and
the heating device is configured to start heating when the temperature controlled switch is connected, and stop heating when the temperature controlled switch is disconnected.

Optionally, the adjusting a rotating speed of the fan includes:
decreasing the rotating speed of the fan in a case that the temperature is less than a preset target temperature;
increasing the rotating speed of the fan in a case that the temperature is greater than a preset target temperature; or
keeping the rotating speed of the fan unchanged in a case that the temperature equals a preset target temperature.

Optionally, the target temperature is 68°C.

Optionally, the controlling the temperature control component according to the temperature further includes:
issuing a thermal fault alarm and controlling the zonal temperature control system in a case that the temperature does not fall within the preset normal temperature range after the rotating speed is adjusted within a preset rotating speed adjustment range.

Optionally, the temperature is a temperature of any filter screen zone, and controlling the zonal temperature control system includes:
stopping heating by the zonal temperature control system corresponding to the filter screen zone to which the temperature corresponds to in a case that the temperature is greater than a maximum of the preset normal temperature range; or
starting heating by the zonal temperature control system corresponding to the filter screen zone to which the temperature corresponds to in a case that the temperature is less than a preset starting temperature.

Optionally, the preset starting temperature is 80°C.

Optionally, the zonal temperature control system includes: a heating device and a temperature controlled switch, and controlling the zonal temperature control system includes:
controlling the temperature controlled switch to be connected or disconnected, so as to control the heating device to start or stop heating.

Optionally, the temperature control component further includes: a fuse system, and controlling the temperature control component according to the temperature further includes:
issuing a thermal fault alarm and controlling the fuse system to fuse in a case that the temperature reaches a preset fusing temperature after controlling the zonal temperature control system,
the fuse system connects a power supply and each zonal temperature control system respectively.

Optionally, a preset fusing temperature is 165°C.

In a second aspect,
a control apparatus for a purifier includes:
an acquiring component, configured to acquire a temperature inside the purifier; and
a control component configured to control a temperature control component according to the temperature to make the temperature fall within a preset normal temperature range, and the temperature control component includes a plurality of zonal temperature control systems, each of the plurality of zonal temperature control systems heats air passing through one filter screen zone of the purifier, and the zonal temperature control systems correspond to filter screen zones one by one.

In a third aspect,
a purifier includes:
temperature sensing devices, configured to collect temperatures inside the purifier;
a controller configured to obtain the temperature, and control a temperature control component according to the temperature; and
the temperature control component configured to be adjusted in operation states under control by the controller and to make the temperature fall within a preset normal temperature range, and the temperature control component includes a plurality of zonal temperature control systems, each of the plurality of zonal temperature control systems heats air passing through one filter screen zone of the purifier, and the zonal temperature control systems correspond to filter screen zones one by one.

Optionally, the temperature sensing devices are arranged in the filter screen zones, and at least one temperature sensing device is arranged in each filter screen zone and is configured to measure a temperature in the filter screen zone.

Optionally, the temperature sensing device is a thermal bulb.

Optionally, the temperature control component further includes: a fan;
the controller is further configured to adjust a rotating speed of the fan according to the temperature.

Optionally, the controller is further configured to control the zonal temperature control system in a case that the temperature does not fall within the preset normal temperature range after the rotating speed of the fan is adjusted within a preset rotating speed adjustment range.

Optionally, the zonal temperature control system includes: a heating device and a temperature controlled switch,
the temperature controlled switch is configured to be connected or disconnected under control by the controller; and
the heating device is configured to start heating when the temperature controlled switch is connected, and stop heating when the temperature controlled switch is disconnected.

Optionally, the temperature control component further includes: a fuse system, and
the controller is further configured to control the fuse system to fuse in a case that the temperature reaches a preset fusing temperature after the zonal temperature control system is controlled,
and the fuse system connects a power supply and each zonal temperature control system respectively.

Optionally, according to the method of the technical solution above, the fuse system is a fuse switch.

### Brief Description of the Drawings

In order to more clearly illustrate technical solutions in the embodiments of the present application or in the prior art, a brief introduction to the accompanying drawings required for the description of the embodiments or the prior art will be provided below. Apparently, the accompanying drawings in the following description are merely some embodiments of the present application, and those of ordinary skill in the art would also be able to derive other drawings from these drawings without making creative efforts.
Fig. 1 is a flowchart of a control method for a purifier provided in an embodiment of the present disclosure; and
Fig. 2 is a specific flowchart of a control method for a purifier provided in an embodiment of the present disclosure;
Fig. 3 is a schematic structural diagram of a control apparatus for a purifier provided in an embodiment of the present disclosure; and
Fig. 4 is a schematic structural diagram of a purifier provided in an embodiment of the present disclosure.

### Detailed Description of the Embodiments

In order to make objectives, technical solutions and advantages of the disclosure more clear, technical solutions of the present disclosure will be described in detail below with reference to accompanying drawings and embodiments. Apparently, the described embodiments are merely some rather than all of the embodiments of the disclosure. Based on the embodiments of the disclosure, all other embodiments derived by those of ordinary skill in the art without making creative efforts fall within the scope of protection of the disclosure.

### Definitions:

Filter screen zone: a filter screen in a purifier is large, and is divided into a plurality of zones, each of which allows heated air to pass therethrough.

Zonal temperature control system: a system that heats air passing through one filter screen zone and controls a heating temperature.

It should be noted that heating of air passing through the filter screen described in the specification does not mean heating of air after passing through the filter screen, but heating of air before passing through the filter screen, that is, heating of air inside the purifier.

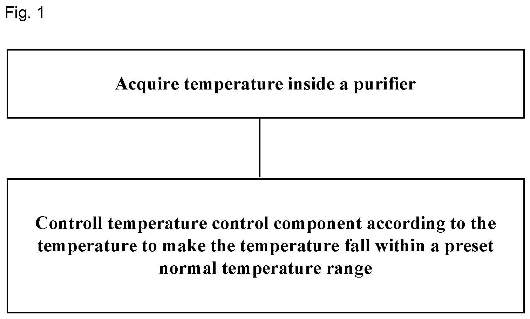

With reference to Fig. 1, in one embodiment, the present disclosure provides a control method for a purifier. The method includes:
a temperature inside a purifier is acquired; and
a temperature control component is controlled according to the temperature to make the temperature fall within a preset normal temperature range, and the temperature control component includes a plurality of zonal temperature control systems, each zonal temperature control system heats air passing through one filter screen zone of the purifier, and the zonal temperature control systems correspond to filter screen zones one by one.

The embodiment of the present disclosure provides the control method for a purifier. After the temperature inside the purifier is acquired, an operation state of the temperature control component is controlled according to the acquired temperature to make the temperature inside the purifier fall within the preset normal temperature range. The temperature control component includes zonal temperature control systems, and the zonal temperature control systems correspond to filter screen zones one by one. The zonal temperature control systems accurately control the temperature inside the purifier, so as to avoid local overheating damage of a filter screen and eliminate a potential safety hazard caused by overheating by a heater. In addition, the zonal temperature control system can further guarantee that air passing through all zones of the filter screen is consistent in temperature, thus improving user experience.

In an embodiment, the present disclosure further provides another control method for a purifier. The method includes:
a temperature inside a purifier is acquired.

As an alternative implementation of the embodiment of the present disclosure, the temperature inside the purifier is acquired by means of a temperature sensing device. In a specific embodiment, the temperature sensing device is a thermal bulb. Specifically, a temperature of air in each filter screen zone is acquired through the thermal bulb arranged in each filter screen zone inside the purifier.

A temperature control component is controlled according to the temperature to make the temperature fall within the preset normal temperature range, and the temperature control component includes a plurality of zonal temperature control systems, each zonal temperature control system heats air passing through one filter screen zone of the purifier, and the zonal temperature control systems correspond to filter screen zones one by one.

It should be noted that a minimum and a maximum of the preset normal temperature range are 56°C and 95°C respectively. It can be understood that the preset normal temperature range can be preset according to actual needs.

As a further description of the above method embodiment, the temperature control component includes a fan, and controlling a temperature control component according to the temperature includes:
a rotating speed of the fan is adjusted according to the temperature.

Specifically, the rotating speed of the fan is decreased in a case that the temperature is less than a preset target temperature;
the rotating speed of the fan is increased in a case that the temperature is greater than a preset target temperature; or
the rotating speed of the fan is kept unchanged in a case that the temperature equals a preset target temperature.

In a specific embodiment, the target temperature is 68°C.

In some optional embodiments, controlling the temperature control component according to the temperature further includes:
a thermal fault alarm is issued and the zonal temperature control system is controlled in a case that the temperature does not fall within the preset normal temperature range after the rotating speed is adjusted within a preset rotating speed adjustment range.

Optionally, the thermal fault alarm can be issued in the forms including but not limited to: a light alarm, a sound alarm and a display displaying alarm.

In particular, controlling the zonal temperature control system when the temperature of any filter screen zone does not fall within the preset normal temperature range includes:
heating by the zonal temperature control system corresponding to the filter screen zone to which the temperature corresponds to is stopped in a case that the temperature is greater than a maximum of the preset normal temperature range; or
heating by the zonal temperature control system corresponding to the filter screen zone to which the temperature corresponds to is started in a case that the temperature is less than a preset starting temperature.

In some optional embodiments, the preset starting temperature is 80°C.

As an optional implementation of the embodiment of the present disclosure, the zonal temperature control system includes: a heating device and a temperature controlled switch, and controlling the zonal temperature control system includes:
the temperature controlled switch is controlled to be connected or disconnected, so as to control the heating device to start or stop heating.

Further, the temperature control component further includes: a fuse system, and controlling the temperature control component according to the temperature further includes: the fuse system is controlled to fuse in a case that the temperature reaches a preset fusing temperature after the zonal temperature control system is controlled,
and the fuse system connects a power supply and each zonal temperature control system respectively.

In some embodiments of the present disclosure, the fuse system is a fuse switch. Optionally, the preset fusing temperature is 165°C.

It should be noted that in actual use, when a heating function of the purifier is not activated, the filter screen can not be damaged by overheating. Therefore, the solutions in the embodiments of the present disclosure are temperature control methods after the heating function of the purifier is activated, that is, the temperature control methods are methods which is used after the heating device is started. When the heating function is not activated or the heating device is not turned on after startup, it is not necessary to use the control methods of the embodiments of the present disclosure.

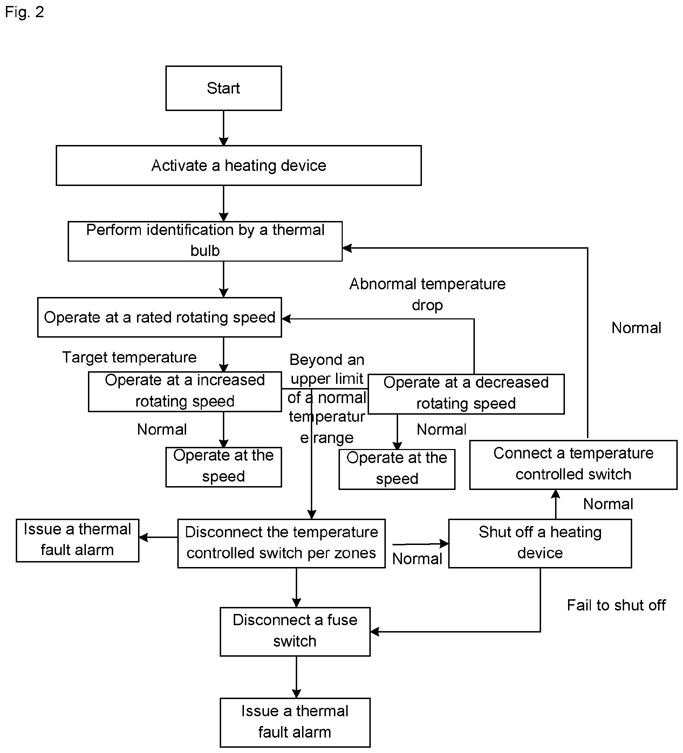

In order to understand the solution of the embodiments of the present disclosure more conveniently, as shown in Fig. 2, it is a specific flowchart of a control method for a purifier provided in an embodiment of the present disclosure. The purifier has a sterilization function by heating. Firstly, the purifier is started, a heating device is turned on, and a thermal bulb identifies a temperature in a filter screen zone. If the temperature falls within a range greater than 56°C and less than 95°C, for sterilization, the temperature is controlled by controlling a rotating speed of a fan. Under normal circumstances, a target temperature can be set to 68°C. If there is an abnormality such as abnormal temperature drop or rise, the rotating speed of the fan is decreased, and is increased respectively. The temperature is kept at 68°C by adjusting a flowing speed of air. If the temperature continuously drops below 56°C after the rotating speed is adjusted within a preset range (for example, the heating device fails to heat or have extremely low heating power), a thermal fault alarm is issued to warn an user (not shown in the figure). When the temperature continues to rise to 95°C, a thermal fault alarm is issued, and control over the zonal temperature control system is executed. A temperature adjustment range of the zonal temperature control system is 80°C-95°C. That is, when the temperature reaches 95°C, a temperature controlled switch in the filter screen zone is controlled to be disconnected, so as to stop heating by the heating device. Under normal circumstances, the temperature of the filter screen zone may drop. When the temperature drops to 80°C, the temperature controlled switch is controlled to be connected, and the heating device is started to heat. In this case, the temperature is still controlled by the fan. When the temperature controlled switch is controlled to be disconnected, if an abnormality occurs, for example, the temperature controlled switch is disconnected or the heating device continues heating after the temperature controlled switch is disconnected, and the temperature reaches 165°C, the fuse switch fuses to cut off connection between a power supply and the heating device. Moreover, a thermal fault alarm is issued.

According to another control method for a purifier provided by the embodiment of the present disclosure, after a temperature inside the purifier is acquired, the temperature is adjusted by controlling a rotating speed of a fan; if the temperature inside the purifier is not adjusted within a preset speed adjustment range, a temperature of each filter screen zone is adjusted by a zonal temperature control system; after a temperature controlled switch of the zonal temperature control system is disconnected, when the temperature still rises and reaches a preset temperature, the zonal temperature control system is disconnected from a power supply by controlling a fuse switch to guarantee that a heating device does not heat air any longer.

The above embodiments are solutions which are used after the purifier is turned on and the heating device is turned on, the temperature measured by the thermal bulb falls within the preset normal temperature range. However, in actual use, there will be some special cases. That is, the temperature measured by the temperature sensor does not fall within the preset normal temperature range. For example:
In some embodiments, the thermal bulb detects the temperature inside the purifier reaching or even exceeding the maximum of the preset normal temperature range, but not reaching the preset fusing temperature. In this case, the purifier does not use the fan for temperature control, but directly issues the heating failure alarm and uses the zonal temperature control system for control, that is, directly controls the temperature controlled switch to be disconnected, and then connects the temperature controlled switch after the temperature drops to a preset starting temperature, and then the rotating speed of the fan is adjusted for temperature control. The successive steps are identical to those under normal conditions and are not repeated herein any more.

In some another embodiments, when the thermal bulb detects that the temperature inside the purifier reaches the preset fusing temperature, the purifier is controlled by the fuse system and the thermal fault alarm is issued.

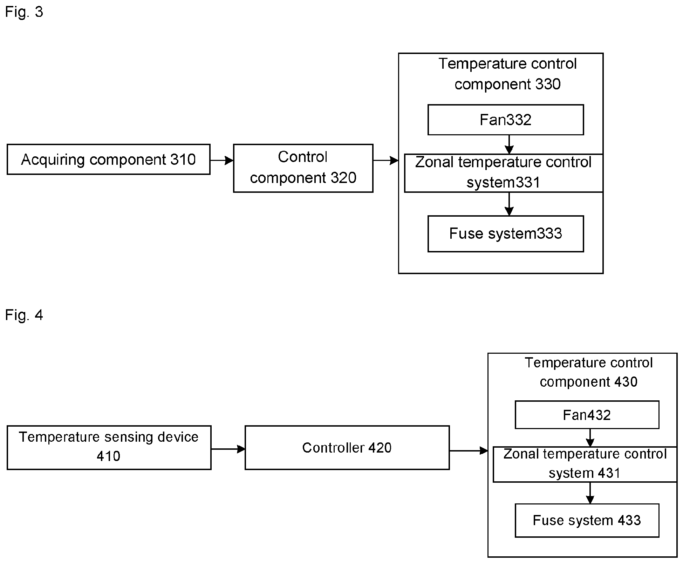

In an embodiment, a control apparatus for a purifier is provided as shown in Fig. 3 and includes:
an acquiring component 310 configured to obtain a temperature inside the purifier.

In a specific embodiment, the acquiring component is configured to obtain a temperature of air passing through filter screen zones in the purifier.

The control apparatus further includes a control component 320 configured to control the temperature control component 330 according to the temperature to make the temperature fall within a preset normal temperature range, and the temperature control component includes a plurality of zonal temperature control systems 331, each zonal temperature control system heats air passing through one filter screen zone of the purifier, and the zonal temperature control systems correspond to filter screen zones one by one.

The temperature control component includes: a fan 332, and the controller is further configured to adjust a rotating speed of the fan according to the temperature.

Specifically, the rotating speed of the fan is decreased in a case that the temperature is less than a preset target temperature; the rotating speed of the fan is increased in a case that the temperature is greater than a preset target temperature; or the rotating speed of the fan is kept unchanged in a case that the temperature equals a preset target temperature.

It can be understood that the zonal temperature control system is controlled by the controller in a case that the temperature does not fall within the preset normal temperature range after the rotating speed is adjusted within a preset rotating speed adjustment range.

Specifically, heating by the zonal temperature control system corresponding to the filter screen zone to which the temperature corresponds to is stopped in a case that the temperature is greater than a maximum of the preset normal temperature range; or
heating by the zonal temperature control system corresponding to the filter screen zone to which the temperature corresponds to is started in a case that the temperature is less than a maximum of the preset normal temperature range.

The zonal temperature control system includes: a heating device and a temperature controlled switch, and controlling the zonal temperature control system by the controller includes:
the temperature controlled switch is controlled by the controller to be connected or disconnected, so as to control the heating device to start or stop heating.

Further, the temperature control component further includes: a fuse system 333, and the controlling a temperature control component according to the temperature further includes:
The fuse system is controlled to fuse in a case that the temperature reaches a preset fusing temperature after the zonal temperature control system is controlled,
and the fuse system connects a power supply and each zonal temperature control system respectively.

The embodiment of the present disclosure provides the control apparatus for a purifier. After the temperature of the filter screen zone inside the purifier is acquired by the acquiring component, the control component adjusts the temperature by controlling the rotating speed of the fan. If there is no way to adjust the temperature by controlling the rotating speed of the fan, the control component adjusts the temperature by controlling the zonal temperature control system. If the zonal temperature control system still can not adjust the temperature of the filter screen zone, the control component directly switches, by means of the fuse system, connection between the heating device and the power supply to stop heating.

The temperature is accurately controlled by the zonal temperature control system, and it is guaranteed that the filter screen is not damaged by overheating by the fuse system.

In an embodiment, as shown in Fig. 4, the present disclosure further provides a purifier. The purifier includes:
temperature sensing devices 410, configured to collect temperatures inside the purifier;
a controller 420, configured to obtain the temperature, and control a temperature control component according to the temperature; and
the temperature control component 430 configured to be adjusted in operation states under control by the controller and to make the temperature fall within a preset normal temperature range, and the temperature control component includes a plurality of zonal temperature control systems 431, each zonal temperature control system heats air passing through one filter screen zone of the purifier, and the zonal temperature control systems correspond to filter screen zones one by one.

For further supplementary description of the above embodiment, optionally, the temperature control component further includes: a fan 432, and the controller is further configured to adjust a rotating speed of the fan according to the temperature.

The rotating speed of the fan is related to the internal temperature to a certain extent. Generally speaking, the higher the speed is, the faster air circulation is and the less the temperature is. Therefore, the internal temperature can be adjusted by adjusting the rotating speed of the fan.

Specifically, the rotating speed of the fan is decreased in a case that the temperature is less than a preset target temperature;
the rotating speed of the fan is increased in a case that the temperature is greater than a preset target temperature; or
the rotating speed of the fan is kept unchanged in a case that the temperature equals a preset target temperature.

It should be understood that the fan normally rotates at a rated speed, and specific speed adjustment can be quantitative. For example, according to a difference between the temperature and a target temperature and a current rotating speed, a corresponding speed adjustment value may be set, adjustment can be performed based on the specific value, or in a qualitative manner, that is according to a comparison relation with the target temperature. The adjustment is not defined in the embodiment of the present disclosure.

During an actual control process, the rotating speed of the fan is adjusted within a certain adjustment range, and can not be decreased or increased indefinitely. The zonal temperature control system is controlled in a case that the temperature does not fall within the preset normal temperature range after the rotating speed of the fan is adjusted within the preset rotating speed adjustment range.

Optionally, the zonal temperature control system includes: a heating device and a temperature controlled switch;
the temperature controlled switch is configured to be connected or disconnected under control by the controller; and
the heating device is configured to start heating when the temperature controlled switch is connected, and stop heating when the temperature controlled switch is disconnected.

Controlling the zonal temperature control system specifically includes: heating by the zonal temperature control system corresponding to the filter screen zone to which the temperature corresponds to is stopped in a case that the temperature is greater than a maximum of the preset normal temperature range; or
heating by the zonal temperature control system corresponding to the filter screen zone to which the temperature corresponds to is started in a case that the temperature reaches a preset starting temperature.

In some cases of an abnormality of the temperature controlled switch in the zonal temperature control system or an abnormality of the control system, when a temperature detected by the temperature sensing device reaches a maximum of the preset normal temperature range, heating by the heating device may not be stopped. In this case, the temperature can continue to rise. When the temperature rises to a certain degree and the heating device can not be turned off through the temperature controlled switch, the filter screen can be damaged and the purifier may fail accordingly.

In order to solve the above problem, the temperature control component further includes: a fuse system 433, and
the controller is further configured to control the fuse system to fuse in a case that the temperature reaches a preset fusing temperature after the zonal temperature control system is controlled,
and the fuse system connects a power supply and each zonal temperature control system respectively.

In some embodiments of the present disclosure, the fuse system is a fuse switch. When the temperature detected by the temperature sensing device is greater than the set fusing temperature, the fusing switch fuses. The heating devices in all zonal temperature control systems are disconnected from the power supply.

In some optional embodiments, when the fuse switch fuses, the purifier further gives a thermal fault alarm to warn a user.

In some embodiments of the present disclosure, the temperature sensing devices are arranged in the filter screen zones, and at least one temperature sensing device is arranged in each filter screen zone and is configured to measure a temperature in the filter screen zone. Optionally, the temperature sensing device is a thermal bulb.

In real life, the temperature that can be detected by the temperature sensing device also has a certain range. In some embodiments, optionally, if the temperature measured by the temperature sensing device keeps rising and reaches a maximum temperature that can be detected by the temperature sensing device, the purifier may give a thermal fault alarm.

In some embodiments, the purifier provided by the embodiment of the present disclosure can be linked with the fan, and the temperature inside the purifier can be adjusted by adjusting the rotating speed of the fan. The temperature inside the purifier is accurately controlled by the zonal temperature control system, so as to avoid local overheating and damage of the filter screen. Finally, when the temperature is too high, the fuse system cuts off connection between the heating device and the power supply in time to prevent the heating device from heating continuously, thereby guaranteeing that the temperature of the filter screen is appropriate, and eliminating a potential safety hazard caused by overheating by the heater.

It can be understood that the same or similar portions in the above embodiments can refer to each other, and the contents not detailed in some embodiments can refer to the same or similar contents in other embodiments.

It should be noted that in description of the disclosure, the terms "first", "second", etc. are merely used for descriptive purposes, and cannot be understood as indicating or implying relative importance. In addition, in the description of the disclosure, unless otherwise specified, "plural" means two or more.

Any process or method in the flowchart or otherwise described herein can be understood as a module, segment or portion of codes that includes one or more executable instructions for implementing specific logical functions or steps of the process, the scope of the preferred embodiments of the disclosure includes other implementations, and functions can be performed out of an order shown or discussed, including in a substantially simultaneous manner or in a reverse order according to the functions involved, which should be understood by those skilled in the art to which the embodiments of the disclosure belong.

It should be understood that various portions of the disclosure can be implemented through hardware, software, firmware, or a combination thereof. In the above embodiment, a plurality of steps or methods can be implemented by software or firmware stored in a memory and executed by a suitable instruction execution system. For example, if the steps or methods are implemented through the hardware, as in another embodiment, they may be implemented by any one or a combination of the following technologies known in the art: discrete logic circuits of logic gates for implementing logic functions on data signals, application-specific integrated circuits with appropriate combinational logic gates, programmable gate arrays (PGA), field programmable gate arrays (FPGA), etc.

Those of ordinary skill in the art can understand that all or part of the steps carried by the method of the above embodiment can be completed by instructing related hardware through a program, and the program can be stored in a computer-readable storage medium, and when executed, the program includes one or a combination of the steps of the method embodiment.

In addition, functional units in the embodiments of the disclosure may be integrated into one processing module, or each unit can be physically present separately, or two or more units can be integrated into one module. The above integrated modules can be implemented in the form of hardware, or a software function module. If the integrated modules are implemented in the form of the software functional modules and sold or used as independent products, they may be stored in a computer readable storage medium.

The storage medium above can be a read-only memory, magnetic disk or optical disk, etc.

In the description of the description, the description with reference to terms such as "an embodiment", "some embodiments", "examples", "particular examples", or "some examples" means that specific features, structures, materials, or characteristics described in combination with the embodiment(s) or example(s) are included in at least one embodiment or example of the disclosure. In the description, schematic expressions of the above terms do not necessarily refer to the same embodiment or example. Further, the particular features, structures, materials or characteristics described can be combined in any one or more embodiments or examples in a suitable manner.

Although the embodiments of the disclosure have been shown and described above, it can be understood that the above embodiments are exemplary and should not be construed as limitation to the disclosure, and those skilled in the art can make changes, modifications, substitutions and variations to the above embodiments within the scope of the invention, as long as the fall within the scope of the claims.

## Claims

1. A control method for a purifier, comprising:
acquiring a temperature inside the purifier; and
controlling a temperature control component according to the temperature to make the temperature fall within a preset normal temperature range,
**characterized in that** wherein the temperature control component comprises a plurality of zonal temperature control systems, each of the plurality of zonal temperature control systems heats air passing through one filter screen zone of the purifier, and the zonal temperature control systems correspond to filter screen zones one by one.

2. The method according to claim 1, wherein acquiring the temperature inside the purifier comprises:
acquiring a temperature of air passing through each filter screen zone in the purifier.

3. The method according to claim 1, wherein
the temperature control component comprises a fan,
and the controlling the temperature control component according to the temperature comprises: adjusting a rotating speed of the fan according to the temperature.

4. The method according to claim 3, wherein adjusting the rotating speed of the fan comprises:
decreasing the rotating speed of the fan in a case that the temperature is less than a preset target temperature;
increasing the rotating speed of the fan in a case that the temperature is greater than a preset target temperature; or
keeping the rotating speed of the fan unchanged in a case that the temperature equals a preset target temperature.

5. The method according to claim 3, wherein controlling the temperature control component according to the temperature further comprises:
issuing a thermal fault alarm and controlling the zonal temperature control system in a case that the temperature does not fall within the preset normal temperature range after the rotating speed is adjusted within a preset rotating speed adjustment range.

6. The method according to claim 1 or 5, wherein the temperature is a temperature of any filter screen zone, and controlling the zonal temperature control system comprises:
stopping heating by the zonal temperature control system corresponding to the filter screen zone to which the temperature corresponds to in a case that the temperature is greater than a maximum of the preset normal temperature range; or
starting heating by the zonal temperature control system corresponding to the filter screen zone to which the temperature corresponds to in a case that the temperature is less than a preset starting temperature.

7. The method according to claim 1 or 5, wherein the zonal temperature control system comprises: a heating device and a temperature controlled switch, and controlling the zonal temperature control system comprises: controlling the temperature controlled switch to be connected or disconnected, so as to control the heating device to start or stop heating.

8. The method according to claim 1 or 5, wherein
the temperature control component further comprises: a fuse system,
controlling the temperature control component according to the temperature further comprises:
issuing a thermal fault alarm and controlling the fuse system to fuse in a case that the temperature reaches a preset fusing temperature after controlling the zonal temperature control system,
wherein the fuse system connects a power supply and each zonal temperature control system respectively.

9. A purifier, comprising:
temperature sensing devices (410), configured to collect temperatures inside the purifier;
a controller (420), configured to acquire the temperature, and control a temperature control component (430) according to the temperature; and
the temperature control component (430), configured to be adjusted in operation states under control by the controller and to make the temperature fall within a preset normal temperature range,
**characterized in that** wherein the temperature control component (430) comprises a plurality of zonal temperature control systems (431), each of the plurality of zonal temperature control systems (431) heats air passing through one filter screen zone of the purifier, and the zonal temperature control systems (431) correspond to filter screen zones one by one.

10. The purifier according to claim 9, wherein the temperature sensing devices (410) are arranged in the filter screen zones, and at least one temperature sensing device (410) is arranged in each filter screen zone and is configured to measure a temperature in the filter screen zone.

11. The purifier according to claim 9, wherein
the temperature control component (430) further comprises: a fan (432);
and the controller (420) is further configured to adjust a rotating speed of the fan according to the temperature.

12. The purifier according to claim 11, wherein the controller (420) is further configured to: control the zonal temperature control system (431) in a case that the temperature does not fall within the preset normal temperature range after the rotating speed of the fan (432) is adjusted within a preset rotating speed adjustment range.

13. The purifier according to claim 12, wherein
the zonal temperature control system (431) further comprises: a heating device and a temperature controlled switch,
the temperature controlled switch is configured to be connected or disconnected under control by the controller (420), and
the heating device is configured to start heating when the temperature controlled switch is connected, and stop heating when the temperature controlled switch is disconnected.

14. The purifier according to any one of claims 9-13, wherein
the temperature control component (430) comprises: a fuse system (433),
and the controller (420) is further configured to control the fuse system (433) to fuse in a case that the temperature reaches a preset fusing temperature after the zonal temperature control system (431) is controlled,
wherein the fuse system (433) connects a power supply and each zonal temperature control system (433) respectively.

## Patentansprüche

1. Verfahren zum Steuern einer Reinigungsvorrichtung, das umfasst:
Erfassen einer Temperatur im Inneren der Reinigungsvorrichtung; und
Steuern einer Temperaturregelkomponente gemäß der Temperatur, damit die Temperatur innerhalb eines voreingestellten normalen Temperaturbereichs liegt,
**dadurch gekennzeichnet, dass**, wobei die Temperaturregelkomponente eine Mehrzahl von zonalen Temperaturregelsystemen umfasst, jedes der Mehrzahl von zonalen Temperaturregelsystemen Luft erwärmt, die durch eine Filtersiebzone der Reinigungsvorrichtung strömt, und die zonalen Temperaturregelsysteme Filtersiebzonen nacheinander entsprechen.

2. Verfahren nach Anspruch 1, wobei das Erfassen der Temperatur im Inneren der Reinigungsvorrichtung umfasst:
Erfassen einer Temperatur von Luft, die durch jede Filtersiebzone in der Reinigungsvorrichtung strömt.

3. Verfahren nach Anspruch 1, wobei
die Temperaturregelkomponente ein Gebläse umfasst,
und das Steuern der Temperaturregelkomponente gemäß der Temperatur umfasst: Anpassen einer Drehzahl des Gebläses gemäß der Temperatur.

4. Verfahren nach Anspruch 3, wobei das Anpassen der Drehzahl des Gebläses umfasst:
Verringern der Drehzahl des Gebläses, wenn die Temperatur unter einer voreingestellten Solltemperatur liegt;
Erhöhen der Drehzahl des Gebläses, wenn die Temperatur über einer voreingestellten Solltemperatur liegt; oder
Vornehmen keiner Änderung an der Drehzahl des Gebläses, wenn die Temperatur einer voreingestellten Solltemperatur gleicht.

5. Verfahren nach Anspruch 3, wobei das Steuern der Temperaturregelkomponente gemäß der Temperatur ferner umfasst:
Ausgeben eines thermischen Störungsalarms und Steuern des zonalen Temperaturregelsystems, wenn die Temperatur nicht innerhalb des voreingestellten normalen Temperaturbereichs liegt, nachdem die Drehzahl innerhalb eines voreingestellten Drehzahlanpassungsbereichs angepasst wurde.

6. Verfahren nach Anspruch 1 oder 5, wobei die Temperatur eine Temperatur einer beliebigen Filtersiebzone ist und das Steuern des zonalen Temperaturregelsystems umfasst:
Stoppen des Heizens durch das zonale Temperaturregelsystem entsprechend der Filtersiebzone, der die Temperatur entspricht, wenn die Temperatur größer als ein Höchstwert des voreingestellten normalen Temperaturbereichs ist; oder
Starten des Heizens durch das zonale Temperaturregelsystem entsprechend der Filtersiebzone, der die Temperatur entspricht, wenn die Temperatur niedriger als eine voreingestellte Starttemperatur ist.

7. Verfahren nach Anspruch 1 oder 5, wobei das zonale Temperaturregelsystem umfasst: eine Heizeinrichtung und einen temperaturgesteuerten Schalter, und wobei das Steuern des zonalen Temperaturregelsystems umfasst: Steuern des temperaturgesteuerten Schalters, so dass dieser verbunden oder getrennt wird, um die Heizeinrichtung so zu steuern, dass mit dem Heizen startet oder dieses stoppt.

8. Verfahren nach Anspruch 1 oder 5, wobei
die Temperaturregelkomponente ferner umfasst: ein Sicherungssystem,
wobei das Steuern der Temperaturregelkomponente gemäß der Temperatur ferner umfasst:
Ausgeben eines thermischen Störungsalarms und Steuern des Sicherungssystems zum Sichern, wenn die Temperatur nach der Steuerung des zonalen Temperaturregelsystems eine voreingestellte Sicherungstemperatur erreicht,
wobei das Sicherungssystem eine Stromversorgung bzw. jedes zonale Temperaturregelsystem verbindet.

9. Reinigungsvorrichtung, die umfasst:
Temperaturfühler (410), die dazu konfiguriert sind, Temperaturen im Inneren der Reinigungsvorrichtung zu erfassen;
eine Steuerung (420), die dazu konfiguriert ist, die Temperatur zu erfassen und eine Temperaturregelkomponente (430) gemäß der Temperatur zu steuern; und
die Temperaturregelkomponente (430), die dazu konfiguriert ist, in Betriebszuständen unter der Steuerung durch die Steuerung angepasst zu werden und zu bewirken, dass die Temperatur innerhalb eines voreingestellten normalen Temperaturbereichs liegt,
**dadurch gekennzeichnet, dass**, wobei die Temperaturregelkomponente (430) eine Mehrzahl von zonalen Temperaturregelsystemen (431) umfasst, jedes der Mehrzahl von zonalen Temperaturregelsystemen (431) Luft erwärmt, die durch eine Filtersiebzone der Reinigungsvorrichtung strömt, und die zonalen Temperaturregelsysteme (431) Filtersiebzonen nacheinander entsprechen.

10. Reinigungsvorrichtung nach Anspruch 9, wobei die Temperaturfühler (410) in den Filtersiebzonen angeordnet sind und mindestens ein Temperaturfühler (410) in jeder Filtersiebzone angeordnet und dazu konfiguriert ist, eine Temperatur in der Filtersiebzone zu messen.

11. Reinigungsvorrichtung nach Anspruch 9, wobei
die Temperaturregelkomponente (430) ferner umfasst: ein Gebläse (432);
und die Steuerung (420) ferner dazu konfiguriert ist, eine Drehzahl des Gebläses gemäß der Temperatur anzupassen.

12. Reinigungsvorrichtung nach Anspruch 11, wobei die Steuerung (420) ferner dazu konfiguriert ist: Steuern des zonalen Temperaturregelsystems (431), wenn die Temperatur nicht innerhalb des voreingestellten normalen Temperaturbereichs liegt, nachdem die Drehzahl des Gebläses (432) innerhalb eines voreingestellten Drehzahlanpassungsbereichs angepasst wurde.

13. Reinigungsvorrichtung nach Anspruch 12, wobei
das zonale Temperaturregelsystem (431) ferner umfasst: eine Heizeinrichtung und einen temperaturgesteuerten Schalter,
der temperaturgesteuerte Schalter dazu konfiguriert ist, unter der Steuerung durch die Steuerung (420) verbunden oder getrennt zu werden, und
die Heizeinrichtung dazu konfiguriert ist, mit dem Heizen zu starten, wenn der temperaturgesteuerte Schalter verbunden ist, und das Heizen zu stoppen, wenn der temperaturgesteuerte Schalter getrennt wird.

14. Reinigungsvorrichtung nach einem der Ansprüche 9 bis 13, wobei:
die Temperaturregelkomponente (430) umfasst: ein Sicherungssystem (433),
und die Steuerung (420) ferner dazu konfiguriert ist, das Sicherungssystem (433) zum Sichern zu steuern, wenn die Temperatur eine voreingestellte Sicherungstemperatur erreicht, nachdem das zonale Temperaturregelsystem (431) gesteuert wurde,
wobei das Sicherungssystem (433) eine Stromversorgung bzw. jedes zonale Temperaturregelsystem (433) verbindet.

## Revendications

1. Procédé de commande d'un purificateur, comprenant :
l'acquisition d'une température à l'intérieur du purificateur ; et
la commande d'un composant de commande de température en fonction de la température afin de faire descendre celle-ci dans une plage de température normale prédéfinie,
**caractérisé en ce que** le composant de commande de température comprend une pluralité de systèmes de commande de température zonale, chacun des systèmes de commande de température zonale chauffe l'air passant à travers une zone de filtre du purificateur, et les systèmes de commande de température zonale correspondent aux zones de filtre une par une.

2. Procédé selon la revendication 1, dans lequel l'acquisition de la température à l'intérieur du purificateur comprend :
l'acquisition de la température de l'air passant à travers chaque zone de filtration du purificateur.

3. Procédé selon la revendication 1, dans lequel
le composant de commande de la température comprend un ventilateur,
et la commande du composant de commande de température en fonction de la température comprend : le réglage de la vitesse de rotation du ventilateur en fonction de la température.

4. Procédé selon la revendication 3, dans lequel le réglage de la vitesse de rotation du ventilateur comprend :
la diminution de la vitesse de rotation du ventilateur si la température est inférieure à une température cible prédéfinie ;
l'augmentation de la vitesse de rotation du ventilateur lorsque la température est supérieure à une température cible prédéfinie ; ou
le maintient la vitesse de rotation du ventilateur inchangée lorsque la température atteint une température cible prédéfinie.

5. Procédé selon la revendication 3, dans lequel la commande du composant de commande de température en fonction de la température comprend en outre :
l'émission d'une alarme de défaut thermique et la commande du système de commande de température zonale dans le cas où la température ne descend pas dans la plage de température normale prédéfinie après que la vitesse de rotation a été ajustée dans une plage de réglage de vitesse de rotation prédéfinie.

6. Procédé selon la revendication 1 ou 5, dans lequel la température est la température d'une zone quelconque de l'écran de filtration, et le système de commande de la température zonale comprend :
l'arrêt du chauffage par le système de commande de température zonale correspondant à la zone du filtre à laquelle la température se rapporte, dans le cas où la température est supérieure à la valeur maximale de la plage de température normale prédéfinie ; ou
le chauffage démarre par le système de commande de température zonale correspondant à la zone du filtre à laquelle la température correspond dans le cas où la température est inférieure à une température de démarrage prédéfinie.

7. Procédé selon la revendication 1 ou 5, dans lequel le système de commande de température zonale comprend : un dispositif de chauffage et un interrupteur thermostatique, et la commande du système de commande de température zonale comprend : la commande de la connexion ou de la déconnexion de l'interrupteur thermostatique, afin de commander le démarrage ou l'arrêt du chauffage du dispositif de chauffage.

8. Procédé selon la revendication 1 ou 5, dans lequel
le composant de commande de température comprend en outre : un système de fusibles,
la commande du composant de commande de température en fonction de la température comprend en outre :
le déclenchement d'une alarme de défaut thermique et la commande du système de fusibles afin de fusionner lorsque la température atteint une température de fusion prédéfinie après avoir commandé le système de commande de température zonale,
dans lequel le système de fusibles connecte respectivement une alimentation électrique et chaque système de commande de température zonale.

9. Purificateur, comprenant :
des dispositifs de détection de température (410), configurés pour collecter les températures à l'intérieur du purificateur ;
un dispositif de commande (420), configuré pour acquérir la température et commander un composant de commande de température (430) en fonction de la température ; et
le composant de commande de température (430), configuré pour être ajusté dans les états de fonctionnement sous la commande du dispositif de commande et pour faire descendre la température dans une plage de température normale prédéfinie,
**caractérisé en ce que** le composant de commande de température (430) comprend une pluralité de systèmes de commande de température zonale (431), chacun des systèmes de commande de température zonale (431) chauffe l'air passant à travers une zone de filtre du purificateur, et les systèmes de commande de température zonale (431) correspondent aux zones de filtre une par une.

10. Purificateur selon la revendication 9, dans lequel les dispositifs de détection de température (410) sont disposés dans les zones de l'écran de filtration, et au moins un dispositif de détection de température (410) est disposé dans chaque zone de l'écran de filtration et est configuré pour mesurer une température dans la zone de l'écran de filtration.

11. Purificateur selon la revendication 9, dans lequel
le composant de commande de température (430) comprend en outre : un ventilateur (432) ;
et le dispositif de commande (420) est en outre configuré pour ajuster la vitesse de rotation du ventilateur en fonction de la température.

12. Purificateur selon la revendication 11, dans lequel le dispositif de commande (420) est en outre configuré pour : commander le système de commande de température zonale (431) dans le cas où la température ne tombe pas dans la plage de température normale prédéfinie après que la vitesse de rotation du ventilateur (432) a été ajustée dans une plage de réglage de vitesse de rotation prédéfinie.

13. Purificateur selon la revendication 12, dans lequel
le système de commande de température zonale (431) comprend en outre : un dispositif de chauffage et un interrupteur à commande de température,
l'interrupteur à commande de température est configuré pour être connecté ou déconnecté sous la commande du dispositif de commande (420), et
l'appareil de chauffage est configuré pour démarrer le chauffage lorsque l'interrupteur à commande de température est connecté, et pour arrêter le chauffage lorsque l'interrupteur à commande de température est déconnecté.

14. Purificateur selon l'une quelconque des revendications 9 à 13, dans lequel
le composant de commande de température (430) comprend : un système de fusibles (433),
et le dispositif de commande (420) est en outre configuré pour commander le système de fusibles (433) afin de fusionner dans le cas où la température atteint une température de fusion prédéfinie après que le système de commande de température zonale (431) soit commandé,
dans lequel le système de fusibles (433) relie respectivement une alimentation électrique et chaque système de commande de température zonale (433).
